Europäisches Patentamt

European Patent Office

Office européen des brevets

(11) Publication number: **0 111 580**

**B1**

(12) **EUROPEAN PATENT SPECIFICATION**

(45) Date of publication of patent specification: **29.06.88**

(51) Int. Cl.⁴: **A 01 N 25/04, A 01 N 53/00**

(21) Application number: **82111746.2**

(22) Date of filing: **17.12.82**

(54) Novel pesticidal formulation.

(43) Date of publication of application:
**27.06.84 Bulletin 84/26**

(45) Publication of the grant of the patent:
**29.06.88 Bulletin 88/26**

(84) Designated Contracting States:
**AT BE CH DE FR GB IT LI LU NL SE**

(56) References cited:
**GB-A-2 025 770**
**US-A-3 399 991**
**US-A-4 071 617**
**US-A-4 243 819**

(73) Proprietor: **SANDOZ AG**
**Lichtstrasse 35**
**CH-4002 Basel (CH)**
(84) **BE CH FR GB IT LI LU NL SE**

(73) Proprietor: **SANDOZ-PATENT-GMBH**
**Humboldtstrasse 3**
**D-7850 Lörrach (DE)**
(84) **DE**

(73) Proprietor: **SANDOZ-ERFINDUNGEN**
**Verwaltungsgesellschaft m.b.H.**
**Brunner Strasse 59**
**A-1235 Wien (AT)**
(84) **AT**

(72) Inventor: **Curtis, Ralston**
**679 University Avenue**
**Los Altos California 94022 (US)**
Inventor: **Papanu, Steven C.**
**883 Lundy Lane**
**Los Altos California 94022 (US)**

The file contains technical information
submitted after the application was filed and
not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 111 580**

**Description**

Background of the invention
Field of the invention

This invention relates to novel pesticidal oil-in-water emulsions containing as the active ingredient a synthetic pyrethroid, the preparation thereof and the use of said emulsions for the control of pests.

Description of the prior art

Aqueous suspensions of solid pesticide particles having a size of from 5 to 10 μm microns and containing polyvinyl alcohol, ethylene or propylene glycol, and as an essential ingredient, a thickener such as methyl cellulose, are disclosed in US-Patent 3,339,991. The suspension of solid particles is achieved only in a mixture containing a thickening agent.

UK-Patent Appln. GB 2,025,770A discloses an oil-in-water pesticidal emulsion having emulsified liquid particles of from 1 to 200 microns in size, polyvinyl alcohol or gum arabic, and a thickener. Suspension stability is achieved only in a viscous mixture containing a thickener. Said application also teaches that gum arabic may be used in place of polyvinyl alcohol in its formulation work. However, in the formulation of the present invention, the mixture proves to be unstable when gum arabic is used.

Summary of the invention

The emulsion concentrates of this invention are stable aqueous oil-in-water dispersions having freeze-thaw stability, 50 degrees centrigrade storage stability and disperse readily when diluted with water for application. The invention comprises a stable pesticidal oil-in-water emulsion concentrate consisting essentially of

(a) 1 to 50 percent by weight of a synthetic pyrethroid active ingredient selected from fluvalinate, permethrin, cypermethrin, deltamethrin, fenpropathrin and fenvalerate, in optical isomer or racemic mixture form dispersed as particles having an average size of less than 1 μm (micron);

(b) 4 to 20 % by weight of polyvinyl alcohol having a molecular weight of from 2,000 to 125,000 and having from 11 to 28 % of its hydroxy groups present as the acetate ester;

(c) 0.1 to 8% by weight of a surfactant selected from anionic surfactants, nonionic surfactants, amphoteric surfactants, cationic surfactants and mixtures thereof;

(d) 4.8 to 20 % by weight of a member selected from the group of freeze-thaw stabilisers consisting of ethylene glycol, propylene glycol and mixtures thereof;

(e) The balance being water; and the emulsion being freeze-thaw stable, 50 degrees centigrade storage stable, and water dispersable.

Because the active ingredients are a thick oily compounds at normal ambient temperature or a low melting solid, it is desirable as a matter of convenience and practicality to formulate the compound into a more easily handled form.

The conventionally used type of liquid pesticidal formulation, an emulsifiable concentrate (EC), contains as its major ingredient a large amount of an organic solvent. Drawbacks of this formulation, due to the organic solvent therein, include phytotoxicity to plants, eye and skin irritation to humans and animals and flammability. The EC formulation also is very sensitive to extremes in water temperature and water hardness.

For these reasons, the aqueous, organic solvent-free formulation of the present invention has been developed. This emulsion exhibits a pesticidal activity equivalent to or exceeding that of a conventional EC formulation. It is freeze-thaw stable, 50 degrees centrigrade storage stable and dispersable in water. Furthermore, it is much less irritating to skin and eyes, non-flammable and shows no solvent phytotoxicity. The formulation of this invention can be diluted in water and without difficulty in temperature extremes and in either soft water or water having up to 20,000 ppm hardness. To do this is very difficult or impossible with an EC formulation.

Detailed description of the invention

The pesticidally active compound in the composition of this invention is a synthetic pyrethroid selected from fluvalinate, permethrin, cypermethrin, deltamethrin, fenpropathrin and fenvalerate.

Fluvalinate is the common name for α - cyano - 3 - phenoxybenzyl 2 - (2 - chloro - 4 - trifluoromethylphenylamino) - 3 - methylbutanoate. Permethrin is 3-phenoxybenzyl (1RS)-cis, trans - 3 - (2,2 - dichlorovinyl) - 2,2 - dimethylcyclopropanecarboxylate. Cypermethrin is (RS) - α - cyano - 3 - phenoxybenzyl (1RS) - cis,trans - 3 - (2,2 - dichlorovinyl) - 2,2 - dimethylcyclopropanecarboxylate. Deltamethrin is (S) - α - cyano - 3 - phenoxybenzyl (1R) - cis - 3 - (2,2 - dibromo vinyl) - 2,2 - dimethylcyclopropanecarboxylate. Fenpropathrin is α - cyano - 3 - phenoxybenzyl 2,2,3,3 - tetramethyl - cyclopropanecarboxylate. Fenvalerate is α - cyano - 3 - phenoxy - benzyl - 2 - (4 - chlorophenyl) - 3 - methylbutanoate.

In the composition of this invention, the active ingredient must be dispersed as liquid particles having an average size of less than 1 μm (micron). Minimum growth in particle size during a prolonged storage is critical. Therefore, an effective, stable emulsion is critical to the composition of this invention. The present invention includes the use of each of the optical isomers and the racemic mixtures. In the examples, unless

2

otherwise specified, the compound used is the racemic mixture. The concentration of active ingredient is from 1 to 50 weight percent in the dispersion concentrate of this invention.

The composition of this invention contains from 4 to 20 weight percent and preferably from 4 to 6.5 weight percent polyvinyl alcohol. Polyvinyl alcohol suitable for use in composition of this invention has a molecular weight of from 2,000 to 125,000 and is about 72 to 89 mole percent hydrolyzed, that is, has from 11 to 28 percent of its hydroxy groups present in the acetate ester form. One such alcohol is Gelvatol®20/90 (Monsanto), which is 88.7—85.5 mole per cent hydrolyzed and has an average molecular weight of 125,000.

Another Gelvatol®40/10, which is 77—72.9 mole percent hydrolyzed and has an average molecular weight of 2,000 or over. A third Gelvatol®20/30, which is 89—87.7 mole percent hydrolyzed and has an average molecular weight of about 10,000. In contrast, a completely hydrolyzed polyvinyl alcohol, such as Elvanol® (DuPont, less than 1 percent residual polyvinyl acetate), causes failure of the mixture to emulsify.

The composition of this invention contains from 0.1 to 8 and preferably from 0.25 to 1.0 weight percent surfactant. The surfactants suitable for use in the composition of this invention include anionic, non-ionic and amphoteric surfactants, cationic surfactants and mixturss thereof.

Surfactants suitable for use in the formulation of the present invention are, for example, blended surfactants which are designed by the manufacturer specifically for use in emulsifiable concentrates of synthetic organic pesticides. These surfactants are believed to be blends of common anionic and non-ionic surfactants with the most functionally significant component being a calcium alkaryl sulfonate, such as calcium dodecylbenzene sulfonate. Their use in this invention is a novel application not intended by the manufacturer. Such a surfactant may be chosen from, for example, Toximul®D (Stepan Chemical); Triton®AG-180, AG-190, or AG-193 (Rohm & Haas); the Atlox® series (Imperial Chemical Industries); and the Sponto® series (Witco).

Another class of surfactants suitable for use in the formulation of the present invention are sodium naphthalene formaldehyde condensates. Examples of such surfactants are Petro Dispersant® 425 (Petro Chemicals Co., Inc.) Blancol®N (GAF) and Tamol®N (Rohm & Haas). Non-ionic surfactants suitable for use in the composition in this invention include surfactants such as Triton®CF-21 (Rohm & Haas), a modified ethoxylated non-ionic surfactant. Amphoteric surfactants such as cocoamido betaine (Deriphat®BAU, Henkel Corporation) and dodecyl betaine and cocobetaine (Lonzaine® IOS and 12C, Lonza, Inc.) can be used in the composition of this invention.

Cationic surfactants, while presenting possible compatibility problems if the composition is to be mixed with anionic containing compositions in the spray tank, is also suitable for use in the composition of this invention. Examples of preferred cationic surfactants are the tertiary amine ethylene oxide condensation products of the primary fatty amines, particularly the tallow and coco acid amines (Ethomeen® C-15, Armac, Inc.).

The preferred surfactants are the anionic surfactants.

The composition of this invention is freeze-thaw stable and 50 degrees centrigrade storage stable. The freeze-thaw stabilizers which are suitable for use in the composition of this invention are propylene glycol, ethylene glycol and mixtures thereof. The concentration of freeze-thaw stabilizer in the composition of this invention is from 4.8 to 20 and preferably from 5 to 10 weight percent.

The emulsions of the present invention can be prepared by dispersing liquid particles of the active ingredient by mechanical means, with a surfactant, in an aqueous mixture of polyvinyl alcohol and water and with an antifreeze. Thus the active ingredient is first premixed until uniform with a surfactant. This mixture is added to the aqueous mixture in a conventional stirrer such as a Waring Blendor®, a Sorvall Omni-mixer® or a Kraft Apparatus® non-aerating stirrer, usually at a high speed and with heating to a temperature of from 60 to 70 degrees centrigrade. In the stirrer, the active ingredient is dispersed in the aqueous phase as liquid particles. Stirring with heating is continued for about 10 to 20 minutes, that is until the particle size average is less than one μm (micron) and all individual particles are less than 2 and preferably less than one μm (micron) in diameter. The resulting formulation is freeze-thaw stable, 50 degrees centrigrade storage stable and dispersable in water. Since a surfactant is used to facilitate dispersion of the active ingredient, it is critical that a freeze-thaw stabilizer be present in the formulation.

Prior to this invention, pesticidal emulsions have required thickeners to maintain stability. In the compositions of the present invention, a thickener is not needed for stability. The elimination of the thickener not only saves in cost by material and processing steps, but it provides a dispersible formulation.

The formulation of the present invention is a concentrate of the pesticidally active component. Before normal use, this concentrate is diluted with water to a concentration providing from 0.01 to 0.1 weight percent of the active ingredient. Therefore, the ability of the composition to disperse easily in water is critical. The synthetic pyrethroids are highly active pesticides, particularly against insects and acarids. Among the pests against which the formulations are pesticidally effective are insects of the order Lepidoptera, Orthoptera, Heteroptera, Homoptera, Doptera, Coleoptera or Hymenoptera, and acarids of the order Acarina, including mites or the family Tetranychidae or Tarsonemidae and ticks such as Ornithodoros. In the use of the formulation of the present invention for combating insects and acarids, the formulation is applied to the locus in a pesticidally effective amount.

The term "freeze-thaw stable" as used herein with reference to oil-in-water is defined to mean the respective emulsion has passed the Freez-Thaw Cycle Test. This test is as follows:

3

Freeze-Thaw Cycle Test

1) A 5 to 10 ml sample of emulsion is placed in a 10 ml screw-top glass vial and capped.

2) The vial is placed in a freezing compartment for 16 hours at 15 degrees centigrade. It is then removed and allowed to sit at 24 degrees centigrade for 8 hours.

3) Repeat Step 2 twice more (to give a total of 3 cycles).

4) Examine and emulsion. The sample must show no visual signs of oiling (separation of the oil component) or solidification. The sample should move and flow as freely with minimal hand stirring as it did before the test. Unless all of these requirements are satisfied, the emulsion is not freeze-thaw stable.

The term "50 degrees centigrade storage stable" as used herein with reference to oil-in-water emulsions is defined to mean the respective emulsion has passed the 50 Degrees Centigrade Storage Test. This test is as follows:

50 Degrees Centigrade Storage Test

1) A 50 g sample of the emulsion is stored at 50 degrees centigrade in a capped glass vial or other sealed container.

2) The particle size of this sample is checked at the end of a 30 day period.

a) In this procedure, the sample is shaken and one drop (from a pipette) is added to 5 ml deionized water and shaken until homogeneous.

b) Two drops of this dispersed sample are placed on a microscope slide and covered with a cover glass.

c) Examine slide with a microscope using an oil-immersion lens under 1000X magnification.

d) Count number of particles (droplets) having diameter greater than 10 μm (microns) in a 18 mm square viewing area. If not more than 10 particles are observed having diameters greater than 35 μm (microns), the test is passed.

The following examples are provided to illustrate the practice of the present invention. Temperature is given in degree celsius. Percentages are percent by weight. The examples set forth procedures actually carried out unless stated to the contrary.

Example 1

25.4 grams of technical (88% active) α-cyano-3-phenoxybenzyl 2 - (2 - chloro - 4 - trifluoromethylphenylamino) - 3 - methylbutanoate (also known as "fluvalinate") were premixed with 0.5 g of Toximul®D at 60 degrees until uniform. This oil phase was then emulsified into an aqueous phase consisting of 5 g of Gelvatol®20/90, 8 g of propylene glycol and 61.1 g of deionized water by stirring, in a commercial mixer, at maximum rpm, for 15 minutes at 65 degrees. The resulting oil phase particles of the oil-in-water flowable emulsion were all less than 1 μm (micron) in diameter, as determined by microscopic inspection.

Example 2

A. To an aqueous phase consisting of 5.1 % Gelavtol®20/90, 12.8 % of propylene glycol and 57.0 % of deionized water was added 25.1 % of technical fluvalinate. The mixture was stirred at maximum speed for approximately 10 minutes at 65 degrees. The emulsion was then cooled to room temperature with continued stirring at low speed during the cooldown. The resulting emulsion particles were all less than 2 μm (microns) in diameter.

B. Following the above procedure, a flowable emulsion was made by combining 24.9 % of fluvalinate with 10.3 % of Gelvatol®20/30, 10.0 % of propylene glycol and 54.8 % of deionized water.

C. In the same manner, 25.4 % of fluvalinate was added to 4.8 % of Gelvatol®20/90 and 69.8 % of deionized water to prepare a flowable emulsion.

Example 3

A. Following the procedure of Example 1, an oil-in-water emulsion was prepared by mixing together 12.0 % of fluvalinate and 0.5 % of Toximul®D and then combining the mixture with 5.0 % of Gelvatol®20/90, 8.0 % of propylene glycol and 74.5 % of deionized water.

B. In the same manner, 25.4 % of fluvalinate and 1.0 % of Toximul®D were added to 4.8 % of Gelvatol®20/90, 4.8 % of propylene glycol and 64.0 % of deionized water to make a flowable emulsion.

Example 4

Following the method of Example 1, an emulsion was prepared by adding 24.8 % of fluvalinate and 8.0 % of Triton®CF-21 to 5.1 % of deionized water. The resulting oil phase particles of the emulsion were all less than 1 μm (micron) in diameter.

Example 5

Following Example 1 procedures, 40.0 % of fluvalinate and 0.5 % of Toximul®D were added to 30.0 % of Gelvatol®40/10, 8.0 % of ethylene glycol and 21.5 % of deionized water to prepare an emulsion. The foregoing percentages are present by weight of the total premix weight. This premix was then diluted with deionized water to a final concentration of 24.8 % of fluvalinate.

4

0 111 580

Example 6

Following the procedure of Example 1, a mixture of 23.54 % of fluvalinate and 0.54 % of Petro®425 dispersant was added to 8.25 % of Gelvatol®20/30, 8.00 % of ethylene glycol and 59.96 % of deionized water to prepare an oil-in-water emulsion.

The half-resolved ester, (RS) - α - cyano - 3 - phenoxybenzyl (R) - 2 - (2 - chloro - 4 - trifluormethylphenylamino) - 3 - methylbutanoate, and the other synthetic pyrethroids named hereinabove can be used in the foregoing examples.

**Claims**

1. A stable pesticidal oil-in-water emulsion concentrate consisting essentially of:

a) 1 to 50 % by weight of an active ingredient selected from fluvalinate, permethrin, cypermethrin, deltamethrin, fenpropathrin and fenvalerate, in optical isomer or racemic mixture form, dispersed as particles having an average size less than 1 μm (micron);

b) 4 to 20 % by weight of polyvinyl alcohol having a molecular weight of from 2000 to 125,000 and having 11 to 28 % of this hydroxy groups present as the acetate ester;

c) 0.1 to 8 % by weight of surfactant selected from anionic surfactants, non-ionic surfactants, amphoteric surfactants, cationic surfactants and mixtures thereof;

d) 4.8 to 20 % by weight of a member selected from the group of freeze-thaw stabilizers consisting of ethylene glycol, propylene glycol and mixtures thereof;

e) the balance being water; and the emulsion being freeze-thaw stable, 50 degrees centrigrade storage stable, and water dispersable.

2. The emulsion concentrate of Claim 1 wherein the surfactant concentration is from 0.1 to 8 % by weight and the concentration of freeze-thaw stabilizer is from 5 to 10 % by weight.

3. The emulsion concentrate of Claim 1 or 2 containing fluvalinate.

4. The emulsion concentrate of Claim 1 or 2 containing permethrin.

5. The emulsion concentrate of Claim 1 or 2 containing cypermethrin.

6. The emulsion concentrate of Claim 1 or 2 containing deltamethrin.

7. The emulsion concentrate of Claim 1 or 2 containing fenpropathrin.

8. The emulsion concentrate of Claim 1 or 2 containing fenvalerate.

9. The emulsion concentrate of Claim 1 or 2 containing as the active ingredient, (RS) - α - cyano - 3 - phenoxybenzyl (R) - 2 - (2 - chloro - 4 - trifluoromethylphenylamino) - 3 - methylbutanoate.

10. The emulsion concentrate of Claim 1 containing about 25 % of the active ingredient.

11. A pesticidal composition comprising the emulsion concentrate of Claims 1 to 10 diluted with sufficient water to provide a concentration of from 0.01 to 0.1 weight percent of the active ingredient.

12. A method for combatting insects and acarids which comprises applying the composition of Claim 11 to the locus in a pesticidally effective amount.

**Patentansprüche**

1. Ein stabiles pestizides Oel-in-Wasser Emulsionskonzentrat im wesentlichen bestehend aus

a) 1 bis 50 Gewichts-% eines Wirkstoffes aus der Reihe Fluvalinat, Permethrin, Cypermethrin, Deltamethrin, Fenpropathrin und Fenvalerat, in optisch isomerer Form oder als racemisches Gemisch, dispergiert als Partikel mit einer durchschnittlichen Grösse von weniger als 1 μm (micron);

b) 4 bis 20 Gewichts-% eines Polyvinylalkohols mit einem Molekulargewicht von 2000 bis 125,000, wovon 11 bis 28 % der vorhandenen Hydroxygruppen als Acetatester vorliegen;

c) 0.1 bis 8 Gewichts-% eines Tensides aus der Reihe anionischer Tenside, nicht-ionischer Tenside, amphoterer Tenside, kationischer Tenside und Mischungen davon;

d) 4.8 bis 20 Gewichts-% eines Vertreters aus der Gruppe der Gefrier-Auftau-Stabilisatoren bestehend aus Aethylenglykol, Propylenglykol und Gemischen davon; und

e) für den Rest Wasser;

wobei die Emulsion gefrier/auftau-stabil, bis 50°Celsius lagerstabil und wasserdispergierbar ist.

2. Emulsionskonzentrat gemäss Anspruch 1 worin die Konzentration des Tensides im Bereich von 0,1 bis 8 Gewichts-% und die Konzentration des Gefrier-Auftau-Stabilisators im Bereich von 5 bis 10 Gewichts-% ist.

3. Emulsionskonzentrat gemäss Anspruch 1 oder 2 enthaltend Fluvalinat.

4. Emulsionskonzentrat gemäss Anspruch 1 oder 2 enthaltend Permethrin.

5. Emulsionskonzentrat gemäss Anspruch 1 oder 2 enthaltend Cypermethrin.

6. Emulsionskonzentrat gemäss Anspruch 1 oder 2 enthaltend Deltamethrin.

7. Emulsionskonzentrat gemäss Anspruch 1 oder 2 enthaltend Fenpropathrin.

8. Emulsionskonzentrat gemäss Anspruch 1 oder 2 enthaltend Fenvalerat.

9. Emulsionskonzentrat gemäss Anspruch 1 oder 2 welches als Wirkstoff (RS) - α - Cyano - 3 - phenoxybenzyl (R) - 2 - (2 - chlor - 4 - trifluormethylphenylamino) - 3 - methylbutanoat enthält.

10. Emulsionskonzentrat gemäss Anspruch 1 enthaltend ca. 25% an Wirkstoff.

11. Pestizide Zubereitung enthaltend das Emulsionskonzentrat gemäss den Ansprüchen 1 bis 10,

5

verdünnt mit genügend Wasser, so dass eine Wirkstoffkonzentration von 0,01 bis 0,1 Gewichtsprozent vorliegt.

12. Verfahren zur Bekämpfung von Insekten und Akariden, dadurch gekennzeichnet, dass die Zubereitung gemäss Anspruch 11 in pestizid wirksamer Menge in deren Lebensraum appliziert wird.

**Revendications**

1. Un concentré pesticide stable d'émulsion huile dans l'eau constitué essentiellement:

a) de 1 à 50% en poids d'une matière active choisie parmi le fluvalinate, la perméthrine, la cyperméthrine, la deltaméthrine, le fenpropathrin et le fenvalérate, sous forme d'isomère optique ou de racémique, dispersée sous forme de particules ayant une dimension moyenne inférieure à 1 μm (micron);

b) de 4 à 20% en poids d'alcool polyvinylique ayant un poids moléculaire de 2000 à 125,000 et ayant de 11 à 28% de ces groupes hydroxy présents sous forme d'acétate;

c) de 0,1 à 8% en poids de tensio-actif choisi parmi les tensio-actifs anioniques, les tensio-actifs non-ioniques, les tensio-actifs amphotères, les tensio-actifs cationiques et les mélanges de ces tension-actifs;

d) de 4,8 à 20% en poids d'un membre choisi parmi le groupe des stabilisants gel-dégel constitué de l'éthylèneglycol, du propylèneglycol et des mélanges de ces composés;

e) le complément étant de l'eau; et l'émulsion étant stable au gel-dégel, stable au stockage à 50°C et dispersable dans l'eau.

2. Le concentré d'émulsion de la revendication 1, dans lequel la concentration de tensio-actif est de 0,1 à 8% en poids et la concentration de stabilisant gel-dégel est de 5 à 10% en poids.

3. Le concentré d'émulsion de la revendication 1 ou 2 contenant le fluvalinate.

4. Le concentré d'émulsion de la revendication 1 ou 2 contenant la perméthrine.

5. Le concentré d'émulsion de la revendication 1 ou 2 contenant la cyperméthrine.

6. Le concentré d'émulsion de la revendication 1 ou 2 contenant la deltaméthrine.

7. Le concentré d'émulsion de la revendication 1 ou 2 contenant le fenpropathrin.

8. Le concentré d'émulsion de la revendication 1 ou 2 contenant le fenvalérate.

9. Le concentré d'émulsion de la revendication 1 ou 2 contenant comme matière active le (R) - 2 - (2 - chloro - 4 - trifluorométhylphénylamino) - 3 - méthylbutanoate de (RS) - α - cyano - 3 - phénoxybenzyle.

10. Le concentré d'émulsion de la revendication 1 contenant environ 25% de matière active.

11. Une composition pesticide comprenant le concentré d'émulsion des revendications 1 à 10 dilué avec suffisamment d'eau pour obtenir une concentration de 0,01 à 0,1% en poids de matière active.

12. Un procédé pour combattre les insectes et·les acariens qui comprend l'application de la composition de la revendication 11 à un endroit en une quantité efficace du point du vue pesticide.